# EUROPÄISCHE PATENTSCHRIFT

(11) **EP 4 558 731 B1**
(45) Veröffentlichungstag und Bekanntmachung des Hinweises auf die Patenterteilung: **01.04.2026**
(21) Anmeldenummer: 23801348.6
(22) Anmeldetag: 02.11.2023
(51) Int. Cl.: F04C 2/107, B05B 12/14, B05C 5/02, B05C 11/10, F04C 11/00, F04C 13/00, F04C 14/24, F04C 14/28

(54) **APPLIKATIONSEINRICHTUNG MIT EINER SPINDELDOSIERPUMPE UND ZUGEHÖRIGES BETRIEBSVERFAHREN**
APPLICATION SYSTEM WITH A SPINDLE METERING PUMP AND ASSOCIATED OPERATING METHOD
SYSTÈME D'APPLICATION AVEC POMPE DOSEUSE À BROCHE ET PROCÉDÉ DE FONCTIONNEMENT ASSOCIÉ

(30) Priorität: 24.11.2022 DE 102022131167
(43) Veröffentlichungstag der Anmeldung: 28.05.2025
(73) Patentinhaber: Dürr Systems AG, 74321 Bietigheim-Bissingen (DE)
(72) Erfinder: MAYER, Hannes, 71642 Ludwigsburg (DE); NISSAN, Daniel, 74357 Bönnigheim (DE); ZASADA, Marcin, 74336 Brackenheim (DE); RADEMACHER, Lothar, 74321 Bietigheim-Bissingen (DE); MARTIN, Herbert, 71384 Weinstadt (DE)
(74) Vertreter: v. Bezold & Partner Patentanwälte - PartG mbB
(86) Internationale Anmeldenummer: PCT/EP2023/080560
(87) Internationale Veröffentlichungsnummer: WO 2024/110168

(56) Entgegenhaltungen:
- EP-A1- 3 347 186
- EP-A1- 3 739 212
- WO-A1-2009/059753
- WO-A1-2014/087052
- CN-A- 106 140 558
- CN-A- 112 403 396
- US-A- 5 046 666

## Beschreibung

### Technisches Gebiet der Erfindung

Die Erfindung betrifft eine Applikationseinrichtung mit einer Spindeldosierpumpe (z.B. Schraubenspindelpumpe) zur Dosierung eines Auftragsmittels (z.B. Klebstoff, Dämmstoff, Dichtmittel, PVC-Plastisole) auf ein Bauteil (z.B. Kraftfahrzeugkarosseriebauteil).

### Hintergrund der Erfindung

Zur Dosierung von hochviskosen Auftragsmitteln (z.B. Klebstoff, Dämmstoff, Dichtmittel, PVC-Plastisole) werden im Stand der Technik verschiedene Typen von Dosierern eingesetzt, wie beispielsweise Kolbendosierer (Einzeldosierer oder Doppeldosierer), Zahnraddosierpumpen oder Spindeldosierpumpen, die beispielsweise als Schraubenspindelpumpe ausgebildet sein können, wie es aus EP 2 961 988 B1 bekannt ist. Schraubenspindelpumpen bieten hierbei gegenüber Kolbendosierern den Vorteil, dass eine Endlosdosierung möglich ist, d.h. es ist im Gegensatz zu einem Kolbendosierer keine Unterbrechung des Dosiervorgangs erforderlich, um den Kolbendosierer nachzufüllen. In der Praxis hat sich deshalb herausgestellt, dass zum Dosieren von hochviskosen Auftragsmitteln Spindeldosierpumpen die beste Wahl sind.

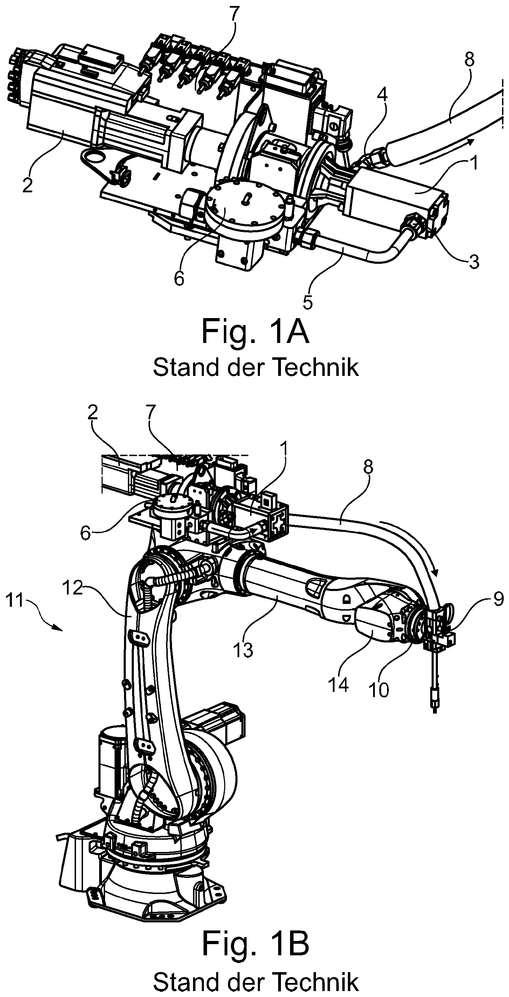

Die nachfolgend beschriebenen Figuren 1A und 1B zeigen eine herkömmliche Applikationseinrichtung mit einer Spindeldosierpumpe 1 zur Dosierung eines hochviskosen Auftragsmittels, wie beispielsweise Klebstoff, Dämmstoff oder Dichtmittel. Die Spindeldosierpumpe 1 wird von einem Servoantrieb 2 angetrieben, so dass die Drehstellung der Spindeldosierpumpe 1 aus der Ansteuerung des Servoantriebs 2 bekannt ist und deshalb für eine Steuerung bzw. Regelung der Spindeldosierpumpe 1 herangezogen werden kann. Die Spindeldosierpumpe 1 nimmt das zu fördernde Auftragsmittel hierbei über einen Materialeingang 3 auf und gibt das zu fördernde Auftragsmittel dann über einen Materialausgang 4 wieder aus. Der Materialeingang 3 der Spindeldosierpumpe 1 ist über eine Rohrleitung 4 mit einem Materialdruckregler 6 verbunden, der den Pumpeneingangsdruck an dem Materialeingang 3 der Spindeldosierpumpe 1 auf einen vorgegebenen Soll-Wert regelt. Darüber hinaus weist die Spindeldosierpumpe 1 ein angeflanschtes Heizmodul 7 auf, um das Auftragsmittel zu erwärmen. Der Materialausgang 4 der Spindeldosierpumpe 1 ist über eine Schlauchleitung 8 mit einem Applikator 9 verbunden, der an einem Montageflansch 10 eines Applikationsroboters 11 montiert ist. Der Applikationsroboter 11 weist zwei schwenkbare Roboterarme 12, 13 und eine Roboterhandachse 14 auf, wie es aus dem Stand der Technik hinlänglich bekannt ist. Die Spindeldosierpumpe 1 ist hierbei an dem distalen Roboterarm 13 ("Arm 2") angebracht, d.h. entfernt von dem Applikator 9 an dem Montageflansch 10 des Applikationsroboters 11. Diese bauliche Trennung des Applikators 9 einerseits und der Spindeldosierpumpe 1 andererseits ist mit verschiedenen Nachteilen verbunden, die nachfolgend kurz beschrieben werden.

Ein Nachteil dieser bekannten Anordnung besteht in den relativ langen Reaktionszeiten beim Einschalten der Spindeldosierpumpe 1 oder allgemein bei einer Änderung des von der Spindeldosierpumpe 1 geförderten Volumenstroms des Auftragsmittels. Dies führt insbesondere beim Auftrag einer Dichtmittelraupe am Raupenanfang zu Applikationsfehlern, wie beispielsweise einem sogenannten Hammerkopf oder einer sogenannten Einschnürung.

Darüber hinaus ist es aufgrund der relativ langen Reaktionszeiten kaum möglich, den geförderten Volumenstrom während eines sogenannten Brushs (z.B. während des Auftrags einer Dichtmittelraupe) dynamisch zu ändern.

In diesem Zusammenhang ist auch zu erwähnen, dass die Schlauchleitung 8 zwischen dem Materialausgang 4 der Spindeldosierpumpe 1 und dem Applikator 9 eine unvermeidbare Schlauchatmung aufweist, so dass eine Änderung des von der Spindeldosierpumpe 1 geförderten Volumenstroms erst zeitverzögert an dem Applikator 9 ankommt.

Zum technischen Hintergrund der Erfindung ist auch hinzuweisen auf DE 10 2019 112 792 A1, DE 10 2007 053 073 A1, EP 3 450 024 A1, EP 3 739 212 A1, WO 2014/087052 A1, CN 112 403 396 A, WO 2009/059753 A1, US 5 046 666 A, CN 106 140 558 A und DE 10 2005 044 796 A1.

Schließlich offenbart EP 3 347 186 A1 eine Applikationseinrichtung gemäß dem Oberbegriff von Anspruch 1. Diese bekannte Applikationseinrichtung ist jedoch noch nicht vollständig befriedigend.

### Beschreibung der Erfindung

Der Erfindung liegt deshalb die Aufgabe zugrunde, eine entsprechend verbesserte Applikationseinrichtung mit einer Spindeldosierpumpe zu schaffen.

Diese Aufgabe wird durch eine erfindungsgemäße Applikationseinrichtung gemäß dem Hauptanspruch gelöst.

Die Erfindung beruht auf der technischen Erkenntnis, dass die störende bauliche Trennung zwischen dem Applikator einerseits und der Spindeldosierpumpe andererseits bei den bekannten Spindeldosierpumpen bauartbedingt ist und sich kaum vermeiden lässt. Dies liegt daran, dass sich der Materialeingang der Spindeldosierpumpe am freien Ende der Spindeldosierpumpe befindet und dort eine direkte Montage des Applikators verhindert. Der Materialausgang der Spindeldosierpumpe befindet sich dagegen bei den bekannten Spindeldosierpumpen an dem antriebsseitigen Ende der Spindeldosierpumpe, wo jedoch ebenfalls keine Montage des Applikators möglich ist. Bei der bekannten Bauart der Spindeldosierpumpe ist deshalb zwingend eine Leitung (z.B. Schlauchleitung) zwischen dem Materialausgang der Spindeldosierpumpe und dem Applikator erforderlich, was zu den vorstehend beschriebenen Nachteilen führt.

Die Erfindung sieht deshalb eine abgewandelte Bauart der Spindeldosierpumpe vor, bei der die räumliche Anordnung des Materialeingangs und des Materialausgangs quasi vertauscht ist. Dies bedeutet, dass der Materialausgang an der Spindeldosierpumpe weiter entfernt von dem Drehantrieb (z.B. Servoantrieb) angeordnet ist als der Materialeingang. Dies ermöglicht dann ein direktes Anflanschen des Applikators an der Spindeldosierpumpe, was mit verschiedenen Vorteilen verbunden ist, die noch detailliert beschrieben werden.

In einem bevorzugten Ausführungsbeispiel der Erfindung befindet sich der Materialausgang der Spindeldosierpumpe in dem dem Drehantrieb abgewandten Drittel oder Viertel des Pumpengehäuses der Spindeldosierpumpe. Der Materialeingang der Spindeldosierpumpe befindet sich dagegen vorzugsweise in dem antriebsseitigen Drittel oder Viertel des Pumpengehäuses der Spindeldosierpumpe.

Weiterhin ist zu erwähnen, dass sich der Materialeingang und/oder der Materialausgang an der Spindeldosierpumpe vorzugsweise bezüglich der Drehachse der Spindeldosierpumpe seitlich befinden, beispielsweise in derselben Seitenfläche des Pumpengehäuses der Spindeldosierpumpe. Es besteht jedoch alternativ auch die Möglichkeit, dass Materialeingang und der Materialausgang an gegenüberliegenden Seitenflächen der Spindeldosierpumpe angeordnet sind oder an benachbarten Seitenflächen der Spindeldosierpumpe.

Ferner ist zu erwähnen, dass der Drehantrieb (z.B. Servoantrieb) der Spindeldosierpumpe vorzugsweise koaxial zur Spindel der Spindeldosierpumpe angeordnet ist. Bei der erfindungsgemäßen Spindeldosierpumpe strömt das Auftragsmittel also im Betrieb parallel zur Drehachse der Spindeldosierpumpe weg von dem Drehantrieb. Im Gegensatz dazu strömt das Auftragsmittel bei den bekannten Spindeldosierpumpen parallel zur Drehachse der Spindeldosierpumpe hin zu dem Drehantrieb.

Weiterhin ist zu erwähnen, dass der im Rahmen der Erfindung verwendete Begriff einer Spindeldosierpumpe allgemein zu verstehen ist und alle Rotationspumpen umfasst, die einen drehbaren Rotor aufweisen, um das Auftragsmittel von dem Materialeingang zu dem Materialausgang zu pumpen. Vorzugsweise handelt es sich bei der Spindeldosierpumpe jedoch um eine Schraubenspindelpumpe, wie sie beispielsweise aus EP 2 961 988 B1 bekannt ist.

Ferner ist auch zu erwähnen, dass die Erfindung hinsichtlich des zu applizierenden Auftragsmittels nicht auf die vorstehend beispielhaft genannten hochviskosen Auftragsmittel beschränkt ist. Vielmehr eignet sich die Erfindung allgemein zur Applikation von flüssigen oder pastösen Auftragsmitteln. In dem bevorzugten Ausführungsbeispiel der Erfindung ist die Spindeldosierpumpe jedoch zur Applikation von Klebstoffen (z.B. Epoxy, Polyurethane (PUR), Isocyanat, Heißbutyl), Dämmstoffen oder Dichtmitteln ausgelegt, wobei als mögliches Auftragsmittel insbesondere auch PVC-Plastisole (PVC: Polyvinylchlorid) zu nennen sind.

Darüber hinaus ist auch zu bemerken, dass die Erfindung die Applikation des Auftragsmittels auf beliebige Typen von Bauteilen ermöglicht. In einem bevorzugten Ausführungsbeispiel der Erfindung ist jedoch vorgesehen, dass das Auftragsmittel auf Kraftfahrzeugkarosseriebauteile aufgebracht wird.

Die Erfindung beansprucht Schutz für eine Applikationseinrichtung mit einer solchen Spindeldosierpumpe und einem Applikator zur Applikation des Auftragsmittels, wobei der Applikator an dem dem Drehantrieb abgewandten Ende der Spindeldosierpumpe direkt angeflanscht ist. Dieses direkte Anflanschen des Applikators an der Spindeldosierpumpe ermöglicht einen sehr kurzen Strömungsweg zwischen dem Materialausgang der Spindeldosierpumpe einerseits und dem Applikator andererseits. Erfindungsgemäß ist der Strömungsweg zwischen dem Materialausgang der Spindeldosierpumpe und dem Applikator kürzer als 10 cm oder 5 cm. Dieser kurze Strömungsweg ist vorteilhaft, weil dadurch eine schnelle Reaktionszeit ermöglicht wird, d.h. die Applikationseinrichtung kann den geförderten Volumenstrom des Auftragsmittels hochdynamisch ändern.

Weiterhin ist zu erwähnen, dass das direkte Anflanschen des Applikators an der Spindeldosierpumpe die Möglichkeit bietet, dass der Strömungsweg zwischen dem Materialausgang der Spindeldosierpumpe und dem Applikator schlauchlos und rohrleitungslos ist. Der Verzicht auf einen Schlauch zwischen dem Materialausgang der Spindeldosierpumpe und dem Applikator bietet den Vorteil, dass keine störende Schlauchatmung mehr auftritt.

Weiterhin ist zu erwähnen, dass dem Materialeingang der Spindeldosierpumpe vorzugsweise ein Materialdruckregler vorgeschaltet ist, der den Pumpeneingangsdruck des Auftragsmittels an dem Materialeingang der Spindeldosierpumpe regelt, insbesondere volumenstromabhängig in Abhängigkeit von dem geförderten Volumenstrom des Auftragsmittels.

In einem bevorzugten Ausführungsbeispiel der Erfindung erhält der Materialdruckregler einen vorgegebenen Soll-Wert für den Pumpeneingangsdruck des Auftragsmittels an dem Materialeingang der Spindeldosierpumpe, wobei der Materialdruckregler dann den Pumpeneingangsdruck auf den vorgegebenen Soll-Wert einregelt.

Die Regelung des Pumpeneingangsdrucks des Auftragsmittels an dem Materialeingang der Spindeldosierpumpe erfolgt vorzugsweise so, dass der Pumpenschlupf der Spindeldosierpumpe minimal ist oder zumindest verringert wird. Als Pumpenschlupf bezeichnet man hierbei die Abweichung zwischen dem von der Spindeldosierpumpe tatsächlich geförderten Volumenstrom einerseits und dem durch eine Pumpenkennlinie der Spindeldosierpumpe drehzahlabhängig vorgegebenen theoretischen Volumenstrom andererseits. So soll der geförderte Volumenstrom des Auftragsmittels idealerweise unabhängig sein von den Druckverhältnissen am Eingang und am Ausgang der Spindeldosierpumpe. Dies entspricht dem Ideal eines Dosierers, kann jedoch in der Praxis aufgrund des unvermeidbaren Pumpenschlupfs nicht vollständig realisiert werden. Die Regelung des Pumpeneingangsdrucks der Spindeldosierpumpe mittels des Materialdruckreglers kann jedoch den Pumpenschlupf minimieren. Darüber hinaus kann die Regelung des Pumpeneingangsdrucks des Auftragsmittels auch so erfolgen, dass der Verschleiß der Spindeldosierpumpe minimal ist.

Es wurde vorstehend bereits erwähnt, dass der Materialdruckregler einen Soll-Wert erhalten kann und dann den Pumpeneingangsdruck auf den Soll-Wert einregelt. Zur Aufnahme dieses Soll-Werts kann der Materialdruckregler einen Sollwerteingang aufweisen. Beispielsweise kann der Sollwerteingang des Materialdruckreglers über ein Proportionalventil mit dem Soll-Wert versorgt werden, wobei das Proportionalventil vorzugsweise pneumatisch arbeitet.

Die dosiervolumenstromabhängigen Soll-Werte für den Pumpeneingangsdruck können beispielsweise in einem Kalibrierlauf ermittelt werden. Dabei fährt man die Spindeldosierpumpe bei geöffnetem Materialdruckregler mit verschiedenen Volumenströmen, und ermittelt den sich ergebenden Dosierdruck. Dieser bildet die Grundlage für die Einstellung des Eingangsdrucks (d.h. des Soll-Werts) der Spindeldosierpumpe im späteren Produktionsbetrieb.

In dem bevorzugten Ausführungsbeispiel der Erfindung weist die Spindeldosierpumpe einen ersten Drucksensor auf, um den Pumpeneingangsdruck des Auftragsmittels an dem Materialeingang der Spindeldosierpumpe zu messen, wobei der erste Drucksensor mit dem Materialdruckregler verbunden sein kann, um dem Materialdruckregler den Pumpeneingangsdruck als Ist-Wert zu liefern.

Weiterhin kann die Spindeldosierpumpe einen zweiten Drucksensor aufweisen, um den Pumpenausgangsdruck des Auftragsmittels an dem Materialausgang der Spindeldosierpumpe zu messen, wobei der zweite Drucksensor mit dem Materialdruckregler verbunden sein kann, um dem Materialdruckregler den Pumpenausgangsdruck als Ist-Wert zu liefern.

Darüber hinaus kann die Spindeldosierpumpe einen dritten Drucksensor aufweisen, der den Druck des Auftragsmittels am Eingang des Materialruckreglers misst, wobei der dritte Drucksensor mit dem Materialdruckregler verbunden sein kann, um dem Materialdruckregler den Druck des Auftragsmittels am Eingang des Materialruckreglers als Ist-Wert zu liefern.

Weiterhin kann ein Drehwertgeber vorgesehen sein, um die Drehstellung der Spindeldosierpumpe zu messen. Es besteht jedoch alternativ auch die Möglichkeit, dass die Drehstellung der Spindeldosierpumpe durch einen Servoantrieb bereitgestellt wird.

In dem bevorzugten Ausführungsbeispiel der Erfindung weist die Applikationseinrichtung eine zusätzliche Kolbenpumpe auf, die stromaufwärts vor dem Materialdruckregler angeordnet ist und das Auftragsmittel mit einem bestimmten Pumpenausgangsdruck über den Materialdruckregler zu der Spindeldosierpumpe fördert. Der Pumpenausgangsdruck der Kolbenpumpe ist hierbei vorzugsweise größer als der gewünschte Pumpeneingangsdruck der Spindeldosierpumpe, so dass der Materialdruckregler zwischen der Kolbenpumpe und der Spindeldosierpumpe dann den Pumpenausgangsdruck der Kolbenpumpe auf den gewünschten Pumpeneingangsdruck der Spindeldosierpumpe herunterregelt.

Die Verbindung zwischen der Kolbenpumpe und dem Materialdruckregler kann in herkömmlicher Weise durch eine starre Rohrleitung erfolgen, wobei diese Rohrleitung auch eine relativ große Leitungslänge von mehr als 2 m, 4 m, 6 m, 8 m, 10 m oder sogar 12 m aufweisen kann. Es besteht jedoch alternativ auch die Möglichkeit, dass die Kolbenpumpe über eine flexible Schlauchleitung mit dem Materialdruckregler verbunden ist oder durch eine Kombination aus einer starren Rohrleitung mit einer flexiblen Schlauchleitung. Auch hierbei kann die gesamte Leitungslänge zwischen der Kolbenpumpe und dem Materialdruckregler größer als 2 m, 4 m, 6 m, 8 m, 10 m oder sogar größer als 12 m sein.

Vorzugsweise handelt es sich bei der Kolbenpumpe um eine druckluftbetriebene Schöpfkolbenpumpe, jedoch sind grundsätzlich auch andere Pumpentypen möglich. Es ist jedoch zu erwähnen, dass die Kolbenpumpe vorzugsweise einen relativ großen maximalen Förderdruck aufweist, der vorzugsweise mindestens 10 bar, 50 bar, 100 bar, 200 bar oder 350 bar beträgt. Beispielsweise kann als Kolbenpumpe die druckluftbetriebene Schöpfkolbenpumpe eingesetzt werden, die von der Anmelderin unter der Produktbezeichnung "EcoPump VPS^{™}" vertrieben wird.

Zu dem Applikator ist allgemein zu erwähnen, dass der Applikator keinen Regler enthält, sondern nur mindestens ein Hauptventil, das die Materialabgabe durch den Applikator wahlweise freigibt oder sperrt. In dem bevorzugten Ausführungsbeispiel der Erfindung ist dieses Hauptventil als Hauptnadelventil ausgebildet. Dies bedeutet, dass das Hauptnadelventil eine verschiebbare Ventilnadel aufweist, die in Abhängigkeit von ihrer Ventilstellung einen Ventilsitz entweder freigibt oder versperrt.

Darüber hinaus kann die erfindungsgemäße Applikationseinrichtung eine Heizung aufweisen, um das Auftragsmittel zu beheizen. Beispielsweise kann eine solche Heizung als Begleitheizung ausgebildet sein, um einen das Auftragsmittel führenden Schlauch oder ein Rohr zu beheizen.

Die erfindungsgemäße Applikationseinrichtung weist vorzugsweise einen Montageflansch auf, um die Applikationseinrichtung lösbar an einem Roboterflansch eines Applikationsroboters zu montieren. Die Applikationseinrichtung enthält hierbei vorzugsweise die Spindeldosierpumpe mit dem Drehantrieb, dem Applikator, dem Materialdruckregler, dem Proportionalventil, etwaigen Drucksensoren und/oder der Heizung. Die Integration dieser Komponenten in der Applikationseinrichtung ermöglicht hierbei einen schnellen Wechsel der kompletten Applikationseinrichtung mit allen Komponenten, was bei der baulichen Trennung der Komponenten im Stand der Technik nicht möglich war. Die vorstehend genannten weiteren Komponenten (z.B. Drehantrieb, Applikator, Materialdruckregler, Proportionalventil, Drucksensoren, Heizung) können hierbei an die Spindeldosierpumpe angeflanscht sein, so dass die Spindeldosierpumpe zusammen mit diesen Komponenten eine einheitliche Baugruppe bildet, die gemeinsam an dem Applikationsroboter montiert bzw. davon demontiert werden kann.

Allgemein ist zu erwähnen, dass die Spindeldosierpumpe vorzugsweise ausgelegt ist zur Förderung eines Volumenstroms von mindestens 5 cm³/s, 10 cm³/s, 20 cm³/s oder 24 cm³/s.

Ferner ist allgemein zu erwähnen, dass die Spindeldosierpumpe vorzugsweise einen ausreichend großen Arbeitsbereich des Volumenstroms aufweist, der vorzugsweise den Volumenstrombereich von 2 cm³/s bis 24 cm³/s umfasst.

Es wurde vorstehend bereits kurz erwähnt, dass der Drehantrieb der Spindeldosierpumpe ein elektromotorischer Servoantrieb sein kann. Dies bietet den Vorteil, dass durch die Ansteuerung des Servoantriebs auch die Drehstellung des Servoantriebs und damit auch die Drehstellung der Spindeldosierpumpe bekannt ist, so dass auf einen separaten Drehwertgeber zur Ermittlung der Drehstellung der Spindeldosierpumpe verzichtet werden kann.

Vorstehend wurde die erfindungsgemäße Applikationseinrichtung als Einkomponentenanlage beschrieben, die für Auftragsmittel ausgelegt ist, die nur aus einer einzigen Komponente bestehen (1K). Es besteht jedoch im Rahmen der Erfindung auch die Möglichkeit, dass zwei solche Applikationseinrichtungen jeweils eine Komponente eines Zweikomponentenmaterials (2K) fördern, wobei dann ein Mischer die beiden Komponenten des Zweikomponentenmaterials zu dem Auftragsmittel mischt. Die Erfindung beansprucht also auch Schutz für eine Zweikomponentenanlage.

Darüber hinaus beansprucht die Erfindung auch Schutz für einen kompletten Applikationsroboter mit mehreren Roboterarmen, optional einer Roboterhandachse und einem Roboterflansch, wobei die vorstehend beschriebene erfindungsgemäße Applikationseinrichtung an dem Roboterflansch montiert ist.

Darüber hinaus beansprucht die Erfindung auch Schutz für ein Betriebsverfahren für die vorstehend beschriebene erfindungsgemäße Applikationseinrichtung. Hierbei kann vorgesehen sein, dass der Pumpenschlupf der Spindeldosierpumpe ermittelt wird. Zur Ermittlung des Pumpenschlupfs der Spindeldosierpumpe bietet die Erfindung zwei Erfindungsvarianten, die nachstehend beschrieben werden.

In einer ersten Erfindungsvariante werden zur Ermittlung des Pumpenschlupfs der Spindeldosierpumpe folgende Schritte durchgeführt:
- Schließen des Hauptventils des Applikators,
- Aufbauen eines vorgegebenen Vordrucks an dem Materialausgang der Spindeldosierpumpe, indem die Spindeldosierpumpe das Auftragsmittel gegen das geschlossene Hauptventil fördert,
- Messen des Pumpenausgangsdrucks an dem Materialausgang der Spindeldosierpumpe mittels des zweiten Drucksensors,
- Abschalten der Spindeldosierpumpe, wenn der Pumpenausgangsdruck an dem Materialausgang der Spindeldosierpumpe den vorgegebenen Vordruck erreicht,
- Regeln des Pumpeneingangsdrucks an dem Materialeingang der Spindeldosierpumpe auf einen konstanten Soll-Wert mittels des Materialdruckreglers,
- Messen des zeitlichen Druckabfalls an dem Materialausgang der Spindeldosierpumpe oder an dem Applikator stromaufwärts vor dem Hauptventil während eines Überwachungszeitraums nach dem Abschalten der Spindeldosierpumpe mittels des zweiten Drucksensors, und
- Auswertung des zeitlichen Druckabfalls während des Überwachungszeitraums zur Ermittlung des Pumpenschlupfs der Spindeldosierpumpe.

In einer zweiten Erfindungsvariante werden dagegen zur Ermittlung des Pumpenschlupfs der Spindeldosierpumpe folgende Schritte durchgeführt:
- Schließen des Hauptventils des Applikators,
- Aufbauen eines vorgegebenen Vordrucks an dem Materialausgang der Spindeldosierpumpe, indem die Spindeldosierpumpe das Auftragsmittel gegen das geschlossene Hauptventil fördert,
- Messen des Pumpenausgangsdrucks an dem Materialausgang der Spindeldosierpumpe mittels des zweiten Drucksensors,
- Erfassen der Drehstellung der Spindeldosierpumpe, wenn der Pumpenausgangsdruck an dem Materialausgang der Spindeldosierpumpe den vorgegebenen Vordruck erreicht, insbesondere durch
   o Messen der Drehstellung mittels des Drehwertgebers oder durch
   o Abfragen der Drehstellung von dem Servoantrieb der Spindeldosierpumpe,
- Regeln des Pumpeneingangsdrucks der Spindeldosierpumpe auf einen konstanten Soll-Wert mittels des Materialdruckreglers,
- Regeln des Pumpenausgangsdrucks an dem Materialausgang der Spindeldosierpumpe auf den vorgegebenen Vordruck durch eine Ansteuerung des Drehantriebs der Spindeldosierpumpe,
- Messen der zeitlichen Änderung der Drehstellung der Spindeldosierpumpe während eines Überwachungszeitraums nach dem Erreichen des vorgegebenen Vordrucks, wobei der Überwachungszeitraum vorzugsweise mehrere Minuten umfasst, insbesondere fünf Minuten, und
- Auswertung der zeitlichen Änderung der Drehstellung der Spindeldosierpumpe während des Überwachungszeitraums zur Ermittlung des Pumpenschlupfs der Spindeldosierpumpe.

In Abhängigkeit von dem ermittelten Pumpenschlupf kann dein eine Korrektur erfolgen, um Dosierfehler zu vermeiden. Beispielsweise kann hierzu eine neue Pumpenkennlinie vermessen werden, die den Zusammenhang zwischen der Pumpendrehzahl der Spindeldosierpumpe einerseits und dem geförderten Volumenstrom andererseits wiedergibt. Diese Pumpenkennlinie kann dann in einer Steuerung hinterlegt werden.

Es wurde vorstehend bereits erwähnt, dass die Erfindung eine hochdynamische Änderung des Volumenstroms des applizierten Auftragsmittels innerhalb eines sogenannten "Brushes" ermöglicht. Beispielsweise kann der "Brush" eine langgestreckte Raupe des Auftragsmittels bilden, die auf ein Bauteil (z.B. Kraftfahrzeugkarosseriebauteil) aufgebracht wird. So werden beispielsweise Klebstoffe und Dichtmittel in Form solcher Raupen auf die jeweiligen Bauteile aufgebracht. Die Erfindung ermöglicht es hierbei, dass der Volumenstrom des applizierten Auftragsmittels entlang der langgestreckten Raupe variiert wird, d.h. innerhalb eines "Brushs". Dies ermöglicht eine Optimierung des Applikationsergebnisses, wobei auch die Vorschubgeschwindigkeit des Applikators entlang der Raupe variiert werden kann. Dieser Erfindungsaspekt ist im Rahmen der Erfindung von eigener schutzwürdiger Bedeutung unabhängig von dem Erfindungsaspekt, der die Ermittlung des Pumpenschlupfes vorsieht.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert.

### Kurzbeschreibung der Zeichnungen

Figur 1A zeigt eine Perspektivansicht einer herkömmlichen Spindeldosierpumpe gemäß dem Stand der Technik.
Figur 1B zeigt eine Perspektivansicht eines Applikationsroboters mit der herkömmlichen Spindeldosierpumpe gemäß Figur 1A.
Figur 2A zeigt eine Perspektivansicht einer erfindungsgemäßen Spindeldosierpumpe.
Figur 2B zeigt eine Perspektivansicht eines Applikationsroboters mit der daran montierten erfindungsgemäßen Spindeldosierpumpe.
Figur 3 zeigt eine Perspektivansicht der erfindungsgemäßen Spindeldosierpumpe ohne die daran montierten weiteren Komponenten.
Figur 4 zeigt eine schematische Darstellung einer erfindungsgemäßen Applikationseinrichtung mit der erfindungsgemäßen Spindeldosierpumpe, einem vorgeschalteten Materialdruckregler und einer Kolbenpumpe.
Figur 5 zeigt ein Flussdiagramm zur Verdeutlichung der Ermittlung des Pumpenschlupfs gemäß einer ersten Erfindungsvariante.
Figur 6 zeigt ein Flussdiagramm zur Verdeutlichung der Ermittlung des Pumpenschlupfs gemäß einer zweiten Erfindungsvariante.
Figur 7 zeigt eine Perspektivansicht zur Verdeutlichung der Applikation einer Klebstoffraupe mit variablem Volumenstrom des Klebstoffs.

### Detaillierte Beschreibung der Zeichnungen

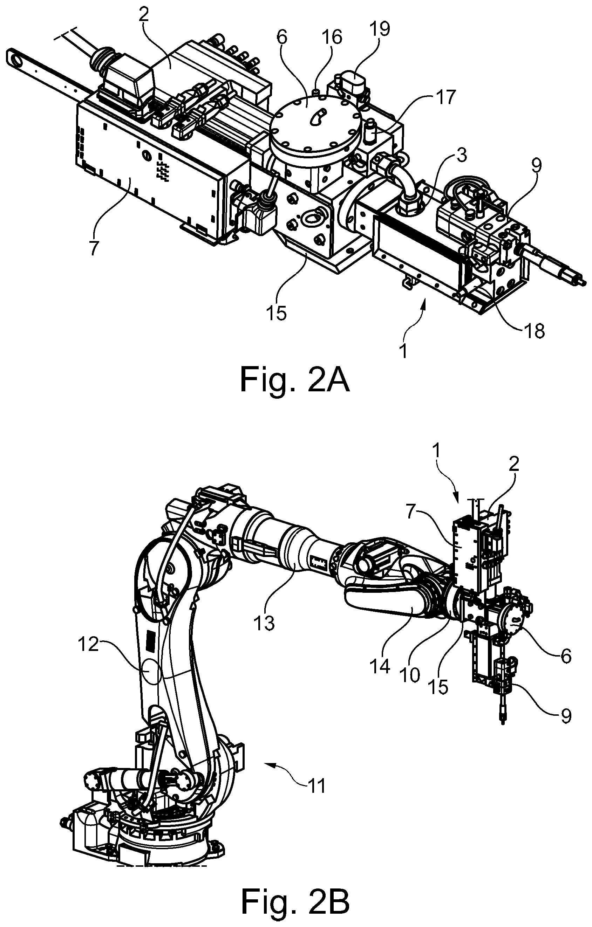

Im Folgenden werden nun die Figuren 2A und 2B beschrieben, die teilweise mit dem Stand der Technik gemäß den Figuren 1A und 1B übereinstimmen, so dass zur Vermeidung von Wiederholungen auf die vorstehende Beschreibung verwiesen wird, wobei für entsprechende Einzelheiten dieselben Bezugszeichen verwendet werden.

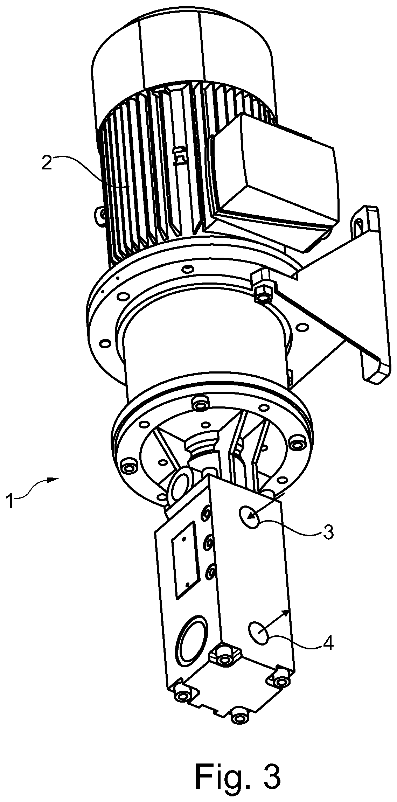

Eine Besonderheit dieses Ausführungsbeispiels besteht darin, dass die räumliche Anordnung des Materialeingangs 3 und des Materialausgangs 4 der Spindeldosierpumpe 1 gegenüber dem Stand der Technik vertauscht ist. So befindet sich der Materialeingang 3 hierbei am antriebsseitigen Ende des Pumpengehäuses der Spindeldosierpumpe 1, während sich der Materialausgang 4 hierbei am distalen Ende des Pumpengehäuses der Spindeldosierpumpe 1 befindet, d.h. auf der dem Servoantrieb 2 abgewandten Seite (vgl. Fig. 3). Der Materialausgang 4 ist also weiter von dem Servoantrieb 2 entfernt als der Materialeingang 3. Diese Vertauschung des Materialeingangs 3 des Materialausgangs 4 ermöglicht es, dass der Applikator 9 direkt an das Pumpengehäuse der Spindeldosierpumpe 1 angeflanscht ist. Die Vertauschung der räumlichen Anordnung des Materialeingangs 3 und des Materialausgangs 4 gegenüber dem Stand der Technik hat zur Folge, dass das zu applizierende Auftragsmittel in dem Pumpengehäuse der Spindeldosierpumpe 1 entlang der Drehachse der Spindeldosierpumpe 1 von dem Servoantrieb 2 wegströmt, wohingegen das Auftragsmittel beim Stand der Technik in der Spindeldosierpumpe 1 zu dem Servoantrieb 2 hinströmt.

Zum einen wird durch das direkte Anflanschen des Applikators 9 an der Spindeldosierpumpe 1 der Strömungsweg zwischen dem Materialausgang 4 der Spindeldosierpumpe 1 einerseits und dem Applikator 9 andererseits sehr stark verkürzt, was eine dynamischere Dosierung ermöglicht.

Zum anderen ermöglicht das direkte Anflanschen des Applikators 9 an der Spindeldosierpumpe 1 aber auch einen Verzicht auf die Schlauchleitung 8, wie sie im Stand der Technik gemäß Fig. 1A, 1B erforderlich ist. Dadurch wird die im Stand der Technik störende Schlauchatmung vollständig vermieden.

Weiterhin ist aus den Zeichnungen ersichtlich, dass die Spindeldosierpumpe 1 einen Montageflansch 15 aufweist, der an dem Montageflansch 10 des Applikationsroboters 11 lösbar montiert werden kann. Hierbei ist ein Schnellverschluss zwischen den beiden Montageflanschen 10, 15 vorgesehen, was eine schnelle Montage und Demontage ermöglicht. Hierbei ist zu erwähnen, dass an der Spindeldosierpumpe 1 auch zahlreiche weitere Komponenten montiert sind, wie das Heizmodul 7, der Materialdruckregler 6 und der Servoantrieb 2, so dass die komplette Baugruppe mit allen diesen Komponenten einfach und schnell montiert bzw. demontiert werden kann. Auch dies bildet einen Vorteil gegenüber dem Stand der Technik gemäß Fig. 1A, 1B, wo der Applikator 9 und die Spindeldosierpumpe 1 getrennt montiert bzw. demontiert werden müssen.

Darüber hinaus sind an der Spindeldosierpumpe 1 Drucksensoren 16, 17 vorgesehen, um den Druck des Auftragsmittels stromaufwärts vor dem Materialdruckregler 6 bzw. stromabwärts hinter dem Materialdruckregler 6 zu messen.

Weiterhin ist an der Spindeldosierpumpe 1 ein Drucksensor 18 vorgesehen, der den Druck des Auftragsmittels an dem Applikator 9 misst.

Ferner zeigen die Zeichnungen ein pneumatisches Proportionalventil 19, das den Materialdruckregler 6 mit einem Soll-Wert für den Pumpeneingangsdruck der Spindeldosierpumpe 1 an dem Materialeingang 3 versorgt. Der Materialdruckregler 6 regelt den Pumpeneingangsdruck an dem Materialeingang 3 der Spindeldosierpumpe 1 dann im Betrieb auf den vorgegebenen Soll-Wert. Das Proportionalventil 19 kann von einer Pumpensteuerung angesteuert werden, die auf diese Weise den Soll-Wert vorgibt.

Figur 3 zeigt eine Perspektivansicht der Spindeldosierpumpe 1, wie sie in den Figuren 2A und 2B dargestellt ist, wobei jedoch die weiteren Komponenten demontiert sind. Hierbei sind der Materialeingang 3 und der Materialausgang 4 der Spindeldosierpumpe 1 nur schematisch dargestellt.

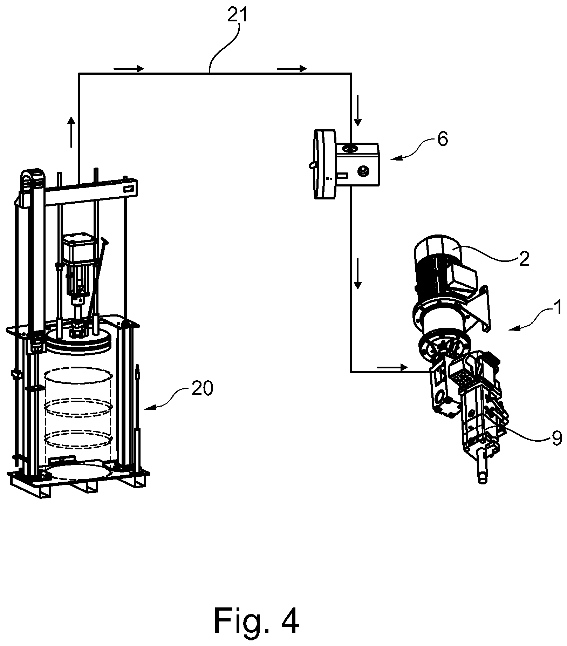

Figur 4 zeigt eine schematische Darstellung einer erfindungsgemäßen Applikationseinrichtung mit der erfindungsgemäßen Spindeldosierpumpe 1 und dem Materialdruckregler 6, so dass zur Vermeidung von Wiederholungen auf die vorstehende Beschreibung verwiesen wird. Darüber hinaus zeigt die Zeichnung eine Kolbenpumpe 20, die einen Fördererdruck von 350 bar bereitstellt. Die Kolbenpumpe 20 ist über eine Rohrleitung 21 mit dem Materialdruckregler 6 verbunden, wobei der Materialdruckregler 6 dann den sehr hohen Förderdruck der Kolbenpumpe 20 auf den gewünschten Pumpeneingangsdruck der Spindeldosierpumpe 1 herunterregelt. Vorzugsweise handelt es sich bei der Kolbenpumpe 20 um eine druckluftbetriebene Schöpfkolbenpumpe, die von der Anmelderin unter der Produktbezeichnung "EcoPump VPS^{™}" vertrieben wird.

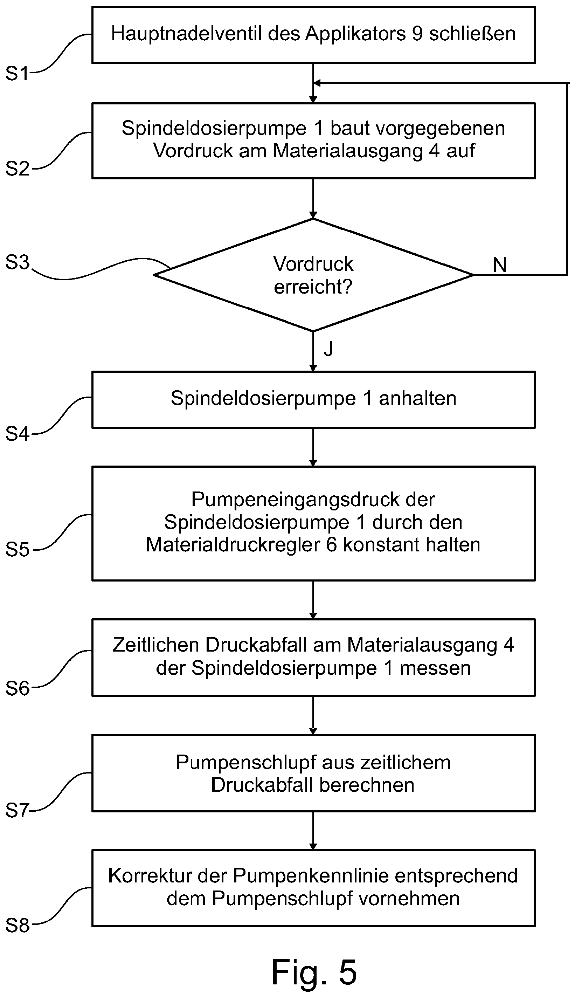

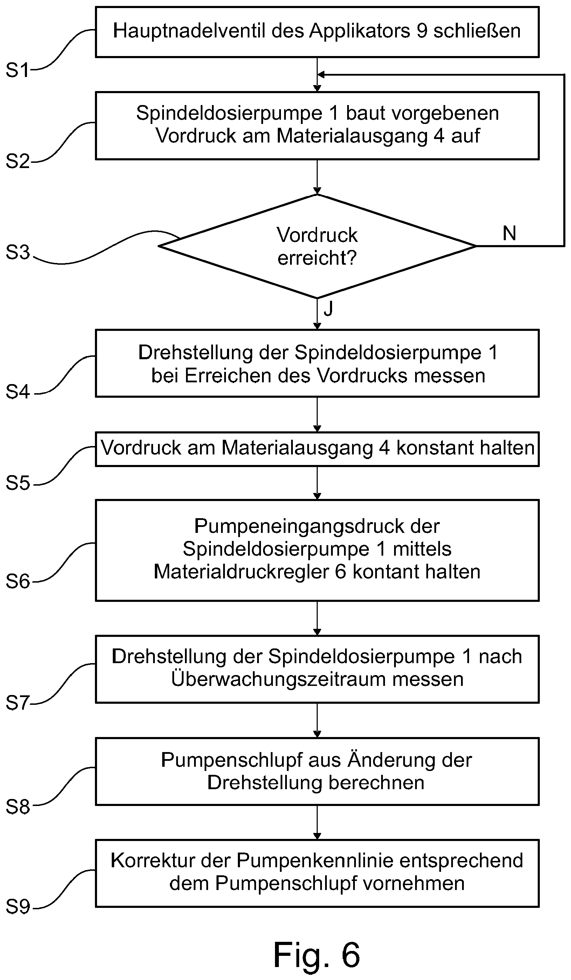

Die Figuren 5 und 6 zeigen zwei Flussdiagramme zur Verdeutlichung der Ermittlung des Pumpenschlupfs der Spindeldosierpumpe. Hierbei ist zu erwähnen, dass es ein definitionsgemäßes Merkmal von Dosierern ist, dass der geförderte Volumenstrom grundsätzlich unabhängig ist von den Druckverhältnissen am Eingang und am Ausgang des Dosierers. Dieses ideale Verhalten eines Dosierers kann jedoch in der Praxis nicht vollständig erreicht werden, was beispielsweise auf mechanischen Verschleiß zurückzuführen ist. Der störende Pumpenschlupf kann deshalb im Betrieb der Spindeldosierpumpe 1 zu Dosierfehlern führen. Die Erfindung ermöglicht deshalb auch die Ermittlung des störenden Pumpenschlupfs und eine anschließende Korrektur des Pumpenschlupfs. Hierzu bietet die Erfindung zwei Varianten, die in den Figuren 5 bzw. 6 dargestellt sind.

Bei der Erfindungsvariante gemäß Figur 5 wird in einem ersten Schritt S1 zunächst das Hauptnadelventil des Applikators 9 geschlossen.

In einem zweiten Schritt S2 baut die Spindeldosierpumpe 1 dann einen Vordruck an dem Materialausgang 4 der Spindeldosierpumpe 1 auf.

Dabei wird in einem Schritt S3 von dem Drucksensor 18 laufend gemessen, ob der gewünschte Vordruck erreicht wird.

Beim Erreichen des gewünschten Vordrucks an dem Materialausgang 4 der Spindeldosierpumpe 1 wird die Spindeldosierpumpe 1 dann in einem Schritt S4 angehalten.

Der Pumpeneingangsdruck an dem Materialeingang 3 der Spindeldosierpumpe 1 wird dann in einem Schritt S5 durch den Materialdruckregler 6 konstant gehalten.

In der Folgezeit kommt es dann aufgrund des nicht vollständig vermeidbaren störenden Pumpenschlupfs zu einem zeitlichen Druckabfall an dem Materialausgang 4 der Spindeldosierpumpe 1, wobei dieser zeitliche Druckabfall in einem Schritt S6 laufend gemessen wird.

In einem Schritt S7 wird dann der Pumpenschlupf aus dem zeitlichen Druckabfall berechnet.

Im nächsten Schritt S6 kann die Pumpenkennlinie dann entsprechend dem ermittelten Pumpenschlupf korrigiert werden, wobei die korrigierte Pumpenkennlinie dann nachfolgend für die Ansteuerung der Spindeldosierpumpe herangezogen wird.

Figur 6 zeigt ein anderes Flussdiagramm zur Verdeutlichung einer zweiten Erfindungsvariante zur Ermittlung des Pumpenschlupfs.

Auch hierbei wird zunächst in einem ersten Schritt S1 das Hauptnadelventil des Applikators 9 geschlossen.

Im nächsten Schritt S2 baut die Spindeldosierpumpe 1 dann einen vorgegebenen Vordruck an dem Materialausgang 4 der Spindeldosierpumpe 1 auf.

Dabei wird dann in einem Schritt S3 laufend geprüft, ob der gewünschte Vordruck an dem Materialausgang 4 der Spindeldosierpumpe 1 erreicht ist.

Falls dies der Fall ist, so erfolgt im Schritt S4 eine Messung der Drehstellung der Spindeldosierpumpe 1 beim Erreichen des Vordrucks. Diese Messung der Drehstellung kann beispielsweise durch einen Drehwertgeber erfolgen. Bei der Verwendung des Servoantriebs 2 ist die Drehstellung der Spindeldosierpumpe 1 jedoch ohnehin aufgrund der Ansteuerung des Servoantriebs 2 bekannt, so dass auf einen separaten Drehwertgeber verzichtet werden kann.

Im nächsten Schritt S5 wird dann der Vordruck an dem Materialausgang 4 der Spindeldosierpumpe 1 konstant gehalten. Aufgrund des nicht vollständig vermeidbaren störenden Pumpenschlupfs erfordert dies, dass die Spindeldosierpumpe 1 zumindest etwas weiter gedreht wird.

Dabei wird dann in einem Schritt S6 der Pumpeneingangsdruck an dem Materialeingang 3 der Spindeldosierpumpe 1 mittels des Materialdruckreglers 6 konstant gehalten.

Nach Ablauf eines Überwachungszeitraums wird dann in einem Schritt S7 wieder die Drehstellung der Spindeldosierpumpe 1 gemessen.

Im nächsten Schritt S8 wird dann der Pumpenschlupf aus der Änderung der Drehstellung der Spindeldosierpumpe 1 während des Überwachungszeitraums abgeleitet.

Der letzte Schritt S9 sieht dann wieder vor, dass die Pumpenkennlinie entsprechend dem ermittelten Pumpenschlupf korrigiert wird, wobei die korrigierte Pumpenkennlinie dann zur Ansteuerung der Spindeldosierpumpe 1 herangezogen werden kann.

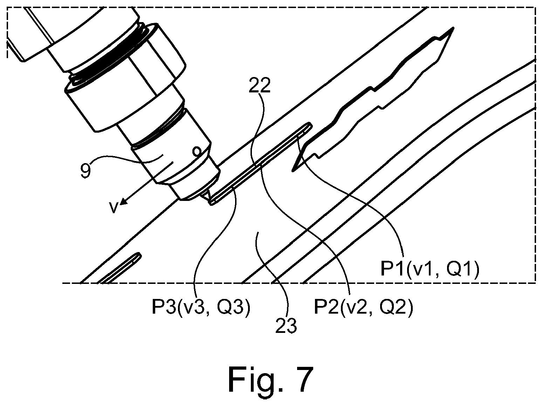

Schließlich zeigt Figur 7 eine Perspektivansicht zur Verdeutlichung des Auftrags einer Klebstoffraupe 22 auf ein Kraftfahrzeugkarosseriebauteil 23 mittels des Applikators 9. Beispielhaft sind hierbei mehrere Punkte P1, P2, P3 entlang der Klebstoffraupe 22 dargestellt, in denen die Bewegungsgeschwindigkeit v des Applikators 9 und der von dem Applikator 9 applizierte Volumenstrom Q des Klebstoffs unterschiedliche Werte v1, v2, v3 bzw. Q1, Q2, Q3 aufweisen kann. Im Rahmen der Erfindung ist es also möglich, dass entlang der Klebstoffraupe 22 ("Brush") sowohl die Bewegungsgeschwindigkeit v des Applikators 9 als auch der von dem Applikator 9 applizierte Volumenstrom Q des Klebstoffs hochdynamisch variiert wird.

### Vorteile der Erfindung

Nachfolgend werden nochmals die wesentlichen Vorteile der Erfindung kurz zusammengefasst:
- Bei der erfindungsgemäßen Spindeldosierpumpe kann der Applikator aufgrund der Vertauschung der räumlichen Anordnung von Materialeingang und Materialausgang direkt an die Spindeldosierpumpe angeflanscht werden.
- Das direkte Anflanschen des Applikators an der Spindeldosierpumpe ermöglicht einen kurzen Strömungsweg zwischen der Spindeldosierpumpe und dem Applikator, was ein hochdynamisches Dosieren erlaubt.
- Das direkte Anflanschen des Applikators an der Spindeldosierpumpe ermöglicht einen Verzicht auf die bisher übliche Schlauchleitung zwischen der Spindeldosierpumpe und dem Applikator, wodurch die störende Schlauchatmung vermieden wird.
- Der Materialdruckregler vor der Spindeldosierpumpe ermöglicht eine Glättung von möglichen Druckpulsationen seitens der Materialversorgung (z.B. Kolbenpumpe). Die Spindeldosierpumpe erhält also einen konstanten Pumpeneingangsdruck.
- Durch eine geeignete Ansteuerung des Materialdruckreglers kann für verschiedene "Brushes" jeweils ein optimaler Pumpeneingangsdruck gewählt werden.
- Durch die Regelung des Pumpeneingangsdrucks kann der Pumpenschlupf reduziert werden, was zu einer Erhöhung der Dosiergenauigkeit, einer Verlängerung der Lebensdauer der Spindeldosierpumpe und einer reduzierten Materialscherung des Auftragsmittels führt.
- Die Überwachung des Pumpenschlupfs ermöglicht eine höhere und konstante Dosiergenauigkeit über die gesamte Lebensdauer und eine verlängerte Einsatzdauer der Spindeldosierpumpe durch Kompensation des eventuell während der Lebensdauer zunehmenden Pumpenschlupfs.
- Die bauliche Integration der Spindeldosierpumpe und des Applikators und weiterer Komponenten ermöglicht eine leichtere Montage bzw. Demontage an dem Applikationsroboter.

### Bezugszeichenliste

- 1: Spindeldosierpumpe
- 2: Servoantrieb der Spindeldosierpumpe
- 3: Materialeingang der Spindeldosierpumpe
- 4: Materialausgang der Spindeldosierpumpe
- 5: Rohrleitung vom Materialdruckregler zum Materialeingang der Spindeldosierpumpe
- 6: Materialdruckregler
- 7: Heizmodul
- 8: Schlauchleitung von dem Materialausgang der Spindeldosierpumpe zum Applikator
- 9: Applikator
- 10: Montageflansch des Applikationsroboters
- 11: Applikationsroboter
- 12: Proximaler Roboterarme ("Arm 1") des Applikationsroboters
- 13: Distaler Roboterarm ("Arm 2") des Applikationsroboters
- 14: Roboterhandachse
- 15: Montageflansch der Spindeldosierpumpe mit Schnellverschluss zur Montage am Roboterflansch
- 16, 17: Drucksensoren
- 18: Drucksensor an dem Applikator
- 19: Pneumatisches Proportionalventil zur Vorgabe eines Soll-Werts für den Materialdruckregler
- 20: Kolbenpumpe
- 21: Rohrleitung von der Kolbenpumpe zu dem Materialdruckregler
- 22: Klebstoffraupe
- 23: Kraftfahrzeugkarosseriebauteil
- P1-P3: Punkte entlang der Klebstoffraupe
- Q1-Q3: Volumenstrom des Klebstoffs in den Punkten P1-P3 entlang der Klebstoffraupe
- v1-v3: Bewegungsgeschwindigkeit des Applikators in den Punkten P1-P3 entlang der Klebstoffraupe

## Patentansprüche

1. Applikationseinrichtung mit
a) einer Spindeldosierpumpe (1) zur Dosierung eines Auftragsmittels, mit
a1) einem Materialeingang (3) zur Aufnahme des zu applizierenden Auftragsmittels,
a2) einem Materialausgang (4) zur Abgabe des zu applizierenden Auftragsmittels, und
a3) einem Drehantrieb (2) zum Drehen der Spindeldosierpumpe (1),
a4) wobei der Materialausgang (4) an der Spindeldosierpumpe (1) weiter entfernt von dem Drehantrieb (2) angeordnet ist als der Materialeingang (3),
b) einem Applikator (9) zur Applikation des Auftragsmittels auf ein Bauteil (23), wobei der Applikator (9) keinen Regler enthält, sondern nur mindestens ein Hauptventil, das die Materialabgabe durch den Applikator (9) wahlweise freigibt oder sperrt, und
c) einem Strömungsweg, der den Materialausgang (4) der Spindeldosierpumpe (1) mit dem Applikator (9) verbindet,
**dadurch gekennzeichnet,**
d) **dass** der Applikator (9) an dem Ende der Spindeldosierpumpe (1) angeflanscht ist, das dem Drehantrieb (2) abgewandt ist, und
e) **dass** der Strömungsweg zwischen dem Materialausgang (4) der Spindeldosierpumpe (1) und dem Applikator (9) kürzer ist als 10 cm.

2. Applikationseinrichtung nach Anspruch 1, **dadurch gekennzeichnet,**
a) **dass** der Materialeingang (3) an der Spindeldosierpumpe (1) bezüglich der Drehachse der Spindeldosierpumpe (1) seitlich angeordnet ist, und
b) **dass** der Materialausgang (4) an der Spindeldosierpumpe (1) bezüglich der Drehachse der Spindeldosierpumpe (1) seitlich angeordnet ist, und
c) **dass** der Materialeingang (3) und der Materialausgang (4) wie folgt an der Spindeldosierpumpe (1) angeordnet sind:
c1) an derselben Seitenfläche der Spindeldosierpumpe (1), oder
c2) an gegenüberliegenden Seitenflächen der Spindeldosierpumpe (1), oder
c3) an angrenzenden Seitenflächen der Spindeldosierpumpe (1), die rechtwinklig zueinander verlaufen, und
d) **dass** der Drehantrieb (2) mit seiner Antriebswelle koaxial zur Spindel der Spindeldosierpumpe (1) angeordnet ist, und
e) **dass** das Auftragsmittel in der Spindeldosierpumpe (1) entlang der Drehachse der Spindeldosierpumpe weg von dem Drehantrieb (2) strömt.

3. Applikationseinrichtung nach Anspruch 1 oder 2, **dadurch gekennzeichnet,**
a) **dass** der Strömungsweg zwischen dem Materialausgang (4) der Spindeldosierpumpe (1) und dem Applikator (9) schlauchlos und rohrleitungslos ist,
b) **dass** der Strömungsweg zwischen dem Materialausgang (4) der Spindeldosierpumpe (1) und dem Applikator (9) kürzer ist als 5 cm, und
c) **dass** dem Materialeingang (3) der Spindeldosierpumpe (1) ein Materialdruckregler (6) vorgeschaltet ist, der den Pumpeneingangsdruck des Auftragsmittels an dem Materialeingang (3) der Spindeldosierpumpe (1) regelt, insbesondere volumenstromabhängig in Abhängigkeit von dem geförderten Volumenstrom des Auftragsmittels.

4. Applikationseinrichtung nach Anspruch 3, **dadurch gekennzeichnet, dass** der Materialdruckregler (6) den Pumpeneingangsdruck des Auftragsmittels an dem Materialeingang (3) der Spindeldosierpumpe (1) so regelt,
dass der Pumpenschlupf der Spindeldosierpumpe (1) minimal ist, wobei der Pumpenschlupf die Abweichung zwischen dem von der Spindeldosierpumpe (1) tatsächlich geförderten Volumenstrom und dem durch eine Pumpenkennlinie der Spindeldosierpumpe (1) drehzahlabhängig vorgegebenen theoretischen Volumenstrom wiedergibt.

5. Applikationseinrichtung nach Anspruch 3 oder 4, **gekennzeichnet durch**
a) einen ersten Drucksensor (17) zur Messung des Pumpeneingangsdrucks des Auftragsmittels an dem Materialeingang (3) der Spindeldosierpumpe (1), wobei der erste Drucksensor (17) mit dem Materialdruckregler (6) verbunden ist und dem Materialdruckregler (6) den gemessenen Pumpeneingangsdruck als Ist-Wert liefert, und
b) einen zweiten Drucksensor (18) zur Messung des Pumpenausgangsdrucks des Auftragsmittels an dem Materialausgang (4) der Spindeldosierpumpe (1), wobei der zweite Drucksensor (18) mit dem Materialdruckregler (6) verbunden ist und dem Materialdruckregler (6) den gemessenen Pumpenausgangsdruck als Ist-Wert liefert, und
c) einen dritten Drucksensor (16) zur Messung des Drucks des Auftragsmittels am Eingang des Materialdruckreglers (6), wobei der dritte Drucksensor (16) mit dem Materialdruckregler (6) verbunden ist und dem Materialdruckregler (6) den gemessenen Drucks des Auftragsmittels am Eingang des Materialdruckreglers (6) als Ist-Wert liefert, und/oder
d) einen Drehwertgeber zur Erfassung der Drehstellung der Spindeldosierpumpe (1).

6. Applikationseinrichtung nach einem der Ansprüche 3 bis 5, **dadurch gekennzeichnet,**
a) **dass** der Materialdruckregler (6) einen Sollwerteingang aufweist, an dem der Materialdruckregler (6) einen Soll-Wert aufnimmt für den Pumpeneingangsdruck des Auftragsmittels an dem Materialeingang (3) der Spindeldosierpumpe (1),
b) **dass** der Sollwerteingang des Materialdruckreglers (6) über ein Proportionalventil (19) mit dem Soll-Wert versorgt wird,
c) **dass** das Proportionalventil (19) pneumatisch arbeitet.

7. Applikationseinrichtung nach einem der Ansprüche 3 bis 6, **dadurch gekennzeichnet,**
a) **dass** die Applikationseinrichtung eine Kolbenpumpe (20) aufweist, die stromaufwärts vor dem Materialdruckregler (6) angeordnet ist und das Auftragsmittel mit einem bestimmten Pumpenausgangsdruck über den Materialdruckregler (6) zu der Spindeldosierpumpe (1) fördert,
b) **dass** der Pumpenausgangsdruck der Kolbenpumpe (20) größer ist als der Pumpeneingangsdruck der Spindeldosierpumpe (1), wobei der Materialdruckregler (6) den Pumpenausgangsdruck der Kolbenpumpe (20) auf den Pumpeneingangsdruck der Spindeldosierpumpe (1) herunterregelt,
c) **dass** die Kolbenpumpe (20) wie folgt mit dem Materialdruckregler (6) verbunden ist:
c1) über eine starre Rohrleitung (21),
c2) über einen flexiblen Schlauch, oder
c3) über eine Kombination aus einer starren Rohrleitung (21) und einem flexiblen Schlauch,
d) **dass** die Rohrleitung (21) zwischen der Kolbenpumpe (20) und dem Materialdruckregler (6) vorzugsweise eine Leitungslänge von mindestens 2 m, 4 m, 6 m, 8 m, 10 m oder 12 m aufweist,
e) **dass** die Kolbenpumpe (20) eine druckluftbetriebene Schöpfkolbenpumpe ist,
f) **dass** die Kolbenpumpe (20) einen maximalen Förderdruck von mindestens 10 bar, 50 bar, 100 bar, 200 bar oder 350 bar aufweist.

8. Applikationseinrichtung nach einem der vorhergehenden Ansprüche, **dadurch gekennzeichnet,**
a) **dass** die Applikationseinrichtung eine Heizung (7) aufweist zur Beheizung des Auftragsmittels, insbesondere als Begleitheizung zur Beheizung eines das Auftragsmittel führenden Schlauchs oder Rohrs, und
b) **dass** die Applikationseinrichtung einen Montageflansch (15) aufweist zur lösbaren Montage der Applikationseinrichtung an einem Roboterflansch (15) eines Applikationsroboters (11), wobei die Applikationseinrichtung folgende Komponenten umfasst, die gemeinsam mittels des Montageflanschs (15) an dem Roboterflansch des Applikationsroboters montiert werden können und an der Spindeldosierpumpe (1) angeflanscht sind:
b1) die Spindeldosierpumpe (1) mit dem Drehantrieb (2),
b2) den Applikator (9),
b3) den Materialdruckregler (6),
b4) das Proportionalventil (19),
b5) den ersten Drucksensor (17) und/oder den zweiten Drucksensor (18) und/oder den dritten Drucksensor (16), und
b6) die Heizung (7), und/oder
c) **dass** die Spindeldosierpumpe (1) ausgelegt ist zur Förderung eines Volumenstroms von mindestens 5 cm³/s, 10 cm³/s, 20 cm³/s oder 24 cm³/s, und
d) **dass** der Drehantrieb (2) der Spindeldosierpumpe (1) ein elektromotorischer Servoantrieb ist, so dass die Drehstellung des Servoantriebs durch die Ansteuerung des Servoantriebs bekannt ist.

9. Applikationsanlage mit
a) zwei Applikationseinrichtungen nach einem der vorhergehenden Ansprüche zur Förderung jeweils einer Komponente eines Zweikomponentenmaterials und
b) einem Mischer zum Mischen der beiden Komponenten des Zweikomponentenmaterials.

10. Applikationsroboter (11) mit mehreren Roboterarmen (12, 13) einer Roboterhandachse (14) und einem Roboterflansch (10), wobei die Applikationseinrichtung nach einem der vorhergehenden Ansprüche oder die Applikationsanlage nach Anspruch 9 an dem Roboterflansch (10) montiert ist.

11. Betriebsverfahren für eine Applikationseinrichtung nach einem der vorhergehenden Ansprüche, **dadurch gekennzeichnet, dass** der Pumpenschlupf der Spindeldosierpumpe (1) ermittelt wird.

12. Betriebsverfahren nach Anspruch 11, **gekennzeichnet durch** die folgenden Schritte zur Ermittlung des Pumpenschlupfs der Spindeldosierpumpe (1):
a) Schließen des Hauptventils des Applikators (9),
b) Aufbauen eines vorgegebenen Vordrucks an dem Materialausgang (4) der Spindeldosierpumpe (1), indem die Spindeldosierpumpe (1) das Auftragsmittel gegen das geschlossene Hauptventil fördert,
c) Messen des Pumpenausgangsdrucks an dem Materialausgang (4) der Spindeldosierpumpe (1) mittels des zweiten Drucksensors,
d) Abschalten der Spindeldosierpumpe (1), wenn der Pumpenausgangsdruck an dem Materialausgang (4) der Spindeldosierpumpe (1) den vorgegebenen Vordruck erreicht,
e) Regeln des Pumpeneingangsdrucks an dem Materialeingang (3) der Spindeldosierpumpe (1) auf einen konstanten Soll-Wert mittels des Materialdruckreglers (6),
f) Messen des zeitlichen Druckabfalls an dem Materialausgang (4) der Spindeldosierpumpe (1) oder an dem Applikator (9) stromaufwärts vor dem Hauptventil während eines Überwachungszeitraums nach dem Abschalten der Spindeldosierpumpe (1) mittels des zweiten Drucksensors, und
g) Auswertung des zeitlichen Druckabfalls während des Überwachungszeitraums zur Ermittlung des Pumpenschlupfs der Spindeldosierpumpe (1).

13. Betriebsverfahren nach Anspruch 11, **gekennzeichnet durch** die folgenden Schritte zur Ermittlung des Pumpenschlupfs der Spindeldosierpumpe (1):
a) Schließen des Hauptventils des Applikators (9),
b) Aufbauen eines vorgegebenen Vordrucks an dem Materialausgang (4) der Spindeldosierpumpe (1), indem die Spindeldosierpumpe (1) das Auftragsmittel gegen das geschlossene Hauptventil fördert,
c) Messen des Pumpenausgangsdrucks an dem Materialausgang (4) der Spindeldosierpumpe (1) mittels des zweiten Drucksensors,
d) Erfassen der Drehstellung der Spindeldosierpumpe (1), wenn der Pumpenausgangsdruck an dem Materialausgang (4) der Spindeldosierpumpe (1) den vorgegebenen Vordruck erreicht, insbesondere **durch**
d1) Messen der Drehstellung mittels des Drehwertgebers oder **durch**
d2) Abfragen der Drehstellung von dem Servoantrieb der Spindeldosierpumpe (1),
e) Regeln des Pumpeneingangsdrucks der Spindeldosierpumpe (1) auf einen konstanten Soll-Wert mittels des Materialdruckreglers (6),
f) Regeln des Pumpenausgangsdrucks an dem Materialausgang (4) der Spindeldosierpumpe (1) auf den vorgegebenen Vordruck **durch** eine Ansteuerung des Drehantriebs (2) der Spindeldosierpumpe (1),
g) Messen der zeitlichen Änderung der Drehstellung der Spindeldosierpumpe (1) während eines Überwachungszeitraums nach dem Erreichen des vorgegebenen Vordrucks, wobei der Überwachungszeitraum mehrere Minuten umfasst, insbesondere fünf Minuten, und
h) Auswertung der zeitlichen Änderung der Drehstellung der Spindeldosierpumpe (1) während des Überwachungszeitraums zur Ermittlung des Pumpenschlupfs der Spindeldosierpumpe (1).

14. Betriebsverfahren nach Anspruch 12 oder 13, **dadurch gekennzeichnet,**
a) **dass** in Abhängigkeit von dem ermittelten Pumpenschlupf eine Korrektur erfolgt, um Dosierfehler zu vermeiden,
b) **dass** die Korrektur vorsieht, dass eine neue Pumpenkennlinie vermessen wird, die den Zusammenhang zwischen der Pumpendrehzahl der Spindeldosierpumpe (1) und dem geförderten Volumenstrom wiedergibt.

15. Betriebsverfahren nach einem der Ansprüche 11 bis 14, **dadurch gekennzeichnet,**
a) **dass** von dem Applikator (9) eine langgestreckte Raupe (22) des Auftragsmittels auf ein Bauteil (23) aufgebracht wird, indem der Applikator (9) mit einer bestimmten Bewegungsgeschwindigkeit (v1, v2, v3) entlang der Raupe (22) über das Bauteil (23) geführt wird, wobei der Applikator (22) das Auftragsmittel mit einem bestimmten Volumenstrom (Q1, Q2, Q3) appliziert,
b) **dass** der Volumenstrom (Q1, Q2, Q3) des Auftragsmittels während der Bewegung des Applikators (9) entlang der Raupe (23) dynamisch variiert wird, und/oder
c) **dass** die Bewegungsgeschwindigkeit (v1, v2, v3) des Applikators (9) während der Bewegung des Applikators (9) entlang der Raupe (23) dynamisch variiert wird.

## Claims

1. Application device with
a) a spindle metering pump (1) for metering an application agent, with
a1) a material inlet (3) for receiving the application agent to be applied,
a2) a material outlet (4) for dispensing the application agent to be applied, and
a3) a rotary drive (2) for rotating the spindle metering pump (1),
a4) wherein the material outlet (4) on the spindle metering pump (1) is arranged further away from the rotary drive (2) than the material inlet (3),
b) an applicator (9) for applying the application agent to a component (23), wherein the applicator (9) does not include a regulator but merely at least one main valve, which selectively releases or blocks the material discharge through the applicator (9), and
c) a flow path connecting the material outlet (4) of the spindle metering pump (1) with the applicator (9),
**characterized in,**
d) **that** the applicator (9) is flange-mounted on that end of the spindle metering pump (1), which faces away from the rotary drive (2), and
e) **that** the flow path between the material outlet (4) of the spindle metering pump (1) and the applicator (9) is shorter than 10 cm.

2. Application device according to claim 1, **characterized in,**
a) **that** the material inlet (3) on the spindle metering pump (1) is arranged laterally with respect to the axis of rotation of the spindle metering pump (1), and
b) **that** the material outlet (4) on the spindle metering pump (1) is arranged laterally with respect to the axis of rotation of the spindle metering pump (1), and
c) **that** the material inlet (3) and the material outlet (4) are arranged on the spindle metering pump (1) as follows:
c1) on the same side surface of the spindle metering pump (1), or
c2) on opposite side surfaces of the spindle metering pump (1), or
c3) on adjacent side surfaces of the spindle metering pump (1), which run at right angles to each other, and
d) **that** the rotary drive (2) is arranged with its drive shaft coaxial to the spindle of the spindle metering pump (1), and
e) **that** the application agent in the spindle metering pump (1) flows along the axis of rotation of the spindle metering pump away from the rotary drive (2).

3. Application device according to claim 1 or 2, **characterized in**
a) **that** the flow path between the material outlet (4) of the spindle metering pump (1) and the applicator (9) is tubeless and pipeless,
b) **that** the flow path between the material outlet (4) of the spindle metering pump (1) and the applicator (9) is shorter than 5 cm, and
c) **that** a material pressure regulator (6) is connected upstream of the material inlet (3) of the spindle metering pump (1), which regulates the pump inlet pressure of the application agent at the material inlet (3) of the spindle metering pump (1), in particular depending on the volume flow rate as a function of the delivered volume flow rate of the application agent.

4. Application device according to claim 3, **characterized in that** the material pressure regulator (6) regulates the pump inlet pressure of the application agent at the material inlet (3) of the spindle metering pump (1) such that the pump slip of the spindle metering pump (1) is minimal, the pump slip representing the deviation between the volume flow actually delivered by the spindle metering pump (1) and the theoretical volume flow predetermined by a pump characteristic curve of the spindle metering pump (1) as a function of speed.

5. Application device according to claim 3 or 4, **characterized by**
a) a first pressure sensor (17) for measuring the pump inlet pressure of the application agent at the material inlet (3) of the spindle metering pump (1), wherein the first pressure sensor (17) is connected to the material pressure regulator (6) and supplies the measured pump inlet pressure as an actual value to the material pressure regulator (6), and
b) a second pressure sensor (18) for measuring the pump outlet pressure of the application agent at the material outlet (4) of the spindle metering pump (1), wherein the second pressure sensor (18) is connected to the material pressure regulator (6) and supplies the measured pump outlet pressure as an actual value to the material pressure regulator (6), and
c) a third pressure sensor (16) for measuring the pressure of the application agent at the inlet of the material pressure regulator (6), wherein the third pressure sensor (16) is connected to the material pressure regulator (6) and supplies the material pressure regulator (6) with the measured pressure of the application agent at the inlet of the material pressure regulator (6) as an actual value, and/or
d) a rotary encoder for detecting the rotary position of the spindle metering pump (1).

6. Application device according to one of claims 3 to 5, **characterized in,**
a) **that** the material pressure regulator (6) has a target input at which the material pressure regulator (6) receives a target value for the pump inlet pressure of the application agent at the material inlet (3) of the spindle metering pump (1),
b) **that** the target input of the material pressure regulator (6) is supplied with the target value via a proportional valve (19),
c) **that** the proportional valve (19) operates pneumatically.

7. Application device according to one of claims 3 to 6, **characterized in,**
a) **that** the application device has a piston pump (20) which is arranged upstream of the material pressure regulator (6) and conveys the application agent with a specific pump outlet pressure via the material pressure regulator (6) to the spindle metering pump (1),
b) **that** the pump outlet pressure of the piston pump (20) is greater than the pump inlet pressure of the spindle metering pump (1), wherein the material pressure regulator (6) regulates the pump outlet pressure of the piston pump (20) down to the pump inlet pressure of the spindle metering pump (1),
c) **that** the piston pump (20) is connected to the material pressure regulator (6) as follows:
c1) via a rigid pipe (21),
c2) via a flexible hose, or
c3) via a combination of a rigid pipe (21) and a flexible hose,
d) **that** the pipe (21) between the piston pump (20) and the material pressure regulator (6) preferably has a pipe length of at least 2 m, 4 m, 6 m, 8m, 10 m or 12 m,
e) **that** the piston pump (20) is a scoop piston pump operated by compressed air,
f) **that** the piston pump (20) has a maximum delivery pressure of at least 10 bar, 50 bar, 100 bar, 200 bar or 350 bar.

8. Application device according to one of the preceding claims, **characterized in,**
a) **that** the application device has a heater (7) for heating the application agent, in particular as trace heating for heating a hose or pipe carrying the application agent, and
b) **that** the application device has a mounting flange (15) for detachable mounting of the application device on a robot flange (15) of an application robot (11), the application device comprising the following components, which can be mounted together on the robot flange of the application robot by means of the mounting flange (15) and are flange-mounted on the spindle metering pump (1):
b1) the spindle metering pump (1) with the rotary drive (2),
b2) the applicator (9),
b3) the material pressure regulator (6),
b4) the proportional valve (19),
b5) the first pressure sensor (17) and/or the second pressure sensor (18) and/or the third pressure sensor (16), and
b6) the heater (7), and/or
c) **that** the spindle metering pump (1) is designed to deliver a volume flow of at least 5 cm³/s, 10 cm³/s, 20 cm³/s or 24 cm³/s, and
d) **that** the rotary drive (2) of the spindle metering pump (1) is an electromotive servo drive, so that the rotary position of the servo drive is known through the control of the servo drive.

9. Application system with
a) two application devices according to one of the preceding claims for conveying one component each of a two-component material and
b) a mixer for mixing the two components of the two-component material.

10. Application robot (11) with a plurality of robot arms (12, 13), a robot hand axis (14) and a robot flange (10), wherein the application device according to one of the preceding claims or the application system according to claim 9 is mounted on the robot flange (10).

11. Operating method for an application device according to one of the preceding claims, **characterized in that** the pump slip of the spindle metering pump (1) is determined.

12. Operating method according to claim 11, **characterized by** the following steps for determining the pump slip of the spindle metering pump (1):
a) Close the main valve of the applicator (9),
b) Building up a predetermined pre-pressure at the material outlet (4) of the spindle metering pump (1) by the spindle metering pump (1) delivering the application agent against the closed main valve,
c) Measuring the pump outlet pressure at the material outlet (4) of the spindle metering pump (1) by means of the second pressure sensor,
d) Switching off the spindle metering pump (1) when the pump outlet pressure at the material outlet (4) of the spindle metering pump (1) reaches the specified inlet pressure,
e) Regulating the pump inlet pressure at the material inlet (3) of the spindle metering pump (1) to a constant target value by means of the material pressure regulator (6),
f) measuring the pressure drop over time at the material outlet (4) of the spindle metering pump (1) or at the applicator (9) upstream of the main valve during a monitoring period after the spindle metering pump (1) has been switched off by means of the second pressure sensor, and
g) Evaluation of the pressure drop over time during the monitoring period to determine the pump slip of the spindle metering pump (1).

13. Operating method according to claim 11, **characterized by** the following steps for determining the pump slip of the spindle metering pump (1):
a) Close the main valve of the applicator (9),
b) Building up a predetermined pre-pressure at the material outlet (4) of the spindle metering pump (1) by the spindle metering pump (1) delivering the application agent against the closed main valve,
c) Measuring the pump outlet pressure at the material outlet (4) of the spindle metering pump (1) by means of the second pressure sensor,
d) Detecting the rotational position of the spindle metering pump (1) when the pump outlet pressure at the material outlet (4) of the spindle metering pump (1) reaches the predetermined inlet pressure, in particular by
d1) Measuring the rotary position by means of the rotary encoder or by
d2) Querying the rotary position of the servo drive of the spindle metering pump (1),
e) Regulating the pump inlet pressure of the spindle metering pump (1) to a constant target value by means of the material pressure regulator (6),
f) Regulating the pump outlet pressure at the material outlet (4) of the spindle metering pump (1) to the specified inlet pressure by controlling the rotary drive (2) of the spindle metering pump (1),
g) measuring the temporal change in the rotational position of the spindle metering pump (1) during a monitoring period after the predetermined inlet pressure has been reached, the monitoring period preferably comprising several minutes, in particular five minutes, and
h) Evaluation of the change in the rotational position of the spindle metering pump (1) over time during the monitoring period to determine the pump slip of the spindle metering pump (1).

14. Operating method according to claim 12 or 13, **characterized in,**
a) **that** a correction is made depending on the determined pump slip in order to avoid metering errors,
b) **that** the correction preferably provides for a new pump characteristic curve to be measured which reflects the relationship between the pump speed of the spindle metering pump (1) and the delivered volume flow.

15. Operating method according to any one of claims 11 to 14, **characterized in,**
a) **that** an elongated bead (22) of the application agent is applied to a component (23) by the applicator (9) by guiding the applicator (9) along the bead (22) over the component (23) at a specific speed of movement (v1, v2, v3), the applicator (22) applying the application agent at a specific volumetric flow rate (Q1, Q2, Q3),
b) **that** the volume flow (Q1, Q2, Q3) of the application agent is dynamically varied during the movement of the applicator (9) along the bead (23), and/or
c) **that** the speed of movement (v1, v2, v3) of the applicator (9) is varied dynamically during the movement of the applicator (9) along the bead (23).

## Revendications

1. Dispositif d'application comprenant
a) une pompe doseuse à vis (1) pour le dosage d'un agent d'application, avec
a1) une entrée de matériau (3) pour la réception de l'agent d'application à appliquer,
a2) une sortie de matériau (4) pour la distribution de l'agent d'application à appliquer, et
a3) un entraînement rotatif (2) pour la rotation de la pompe doseuse à vis (1),
a4) la sortie de matériau (4) étant disposée sur la pompe doseuse à vis (1) plus éloignée de l'entraînement rotatif (2) que l'entrée de matériau (3),
b) un applicateur (9) pour l'application de l'agent d'application sur un composant (23), l'applicateur (9) ne contenant pas de régulateur, mais seulement au moins une vanne principale qui libère ou bloque au choix la distribution de matériau par l'applicateur (9), et
c) un trajet d'écoulement reliant la sortie de matériau (4) de la pompe doseuse à vis (1) à l'applicateur (9),
**caractérisé en ce que**
d) l'applicateur (9) est bridé à l'extrémité de la pompe doseuse à vis (1) opposée à l'entraînement rotatif (2), et
e) le trajet d'écoulement entre la sortie de matériau (4) de la pompe doseuse à vis (1) et l'applicateur (9) est inférieur à 10 cm.

2. Dispositif d'application selon la revendication 1, **caractérisé en ce que**
a) l'entrée de matériau (3) sur la pompe doseuse à vis (1) est disposée latéralement par rapport à l'axe de rotation de la pompe doseuse à vis (1), et
b) la sortie de matériau (4) sur la pompe doseuse à vis (1) est disposée latéralement par rapport à l'axe de rotation de la pompe doseuse à vis (1), et
c) l'entrée de matériau (3) et la sortie de matériau (4) sont disposées sur la pompe doseuse à vis (1) comme suit :
c1) sur la même face latérale de la pompe doseuse à vis (1), ou
c2) sur des faces latérales opposées de la pompe doseuse à vis (1), ou
c3) sur des faces latérales adjacentes de la pompe doseuse à vis (1) qui sont perpendiculaires l'une à l'autre, et
d) l'entraînement rotatif (2) est disposé avec son arbre d'entraînement coaxial à la vis de la pompe doseuse à vis (1), et
e) l'agent d'application s'écoule dans la pompe doseuse à vis (1) le long de l'axe de rotation de la pompe doseuse à vis en s'éloignant de l'entraînement rotatif (2).

3. Dispositif d'application selon la revendication 1 ou 2, **caractérisé en ce que**
a) le trajet d'écoulement entre la sortie de matériau (4) de la pompe doseuse à vis (1) et l'applicateur (9) est sans tuyau et sans conduite rigide,
b) le trajet d'écoulement entre la sortie de matériau (4) de la pompe doseuse à vis (1) et l'applicateur (9) est inférieur à 5 cm, et
c) un régulateur de pression de matériau (6) est disposé en amont de l'entrée de matériau (3) de la pompe doseuse à vis (1), qui régule la pression d'entrée de pompe de l'agent d'application à l'entrée de matériau (3) de la pompe doseuse à vis (1), en particulier dépendant du débit volumique en fonction du débit volumique acheminé de l'agent d'application.

4. Dispositif d'application selon la revendication 3, **caractérisé en ce que** le régulateur de pression de matériau (6) régule la pression d'entrée de pompe de l'agent d'application à l'entrée de matériau (3) de la pompe doseuse à vis (1) de sorte que le glissement de pompe de la pompe doseuse à vis (1) soit minimal, le glissement de pompe représentant l'écart entre le débit volumique effectivement acheminé par la pompe doseuse à vis (1) et le débit volumique théorique prédéfini par une courbe caractéristique de pompe de la pompe doseuse à vis (1) dépendant de la vitesse de rotation.

5. Dispositif d'application selon la revendication 3 ou 4, **caractérisé par**
a) un premier capteur de pression (17) pour mesurer la pression d'entrée de pompe de l'agent d'application à l'entrée de matériau (3) de la pompe doseuse à vis (1), le premier capteur de pression (17) étant relié au régulateur de pression de matériau (6) et fournissant au régulateur de pression de matériau (6) la pression d'entrée de pompe mesurée comme valeur réelle, et
b) un deuxième capteur de pression (18) pour mesurer la pression de sortie de pompe de l'agent d'application à la sortie de matériau (4) de la pompe doseuse à vis (1), le deuxième capteur de pression (18) étant relié au régulateur de pression de matériau (6) et fournissant au régulateur de pression de matériau (6) la pression de sortie de pompe mesurée comme valeur réelle, et
c) un troisième capteur de pression (16) pour mesurer la pression de l'agent d'application à l'entrée du régulateur de pression de matériau (6), le troisième capteur de pression (16) étant relié au régulateur de pression de matériau (6) et fournissant au régulateur de pression de matériau (6) la pression mesurée de l'agent d'application à l'entrée du régulateur de pression de matériau (6) comme valeur réelle, et/ou
d) un capteur de rotation pour détecter la position de rotation de la pompe doseuse à vis (1).

6. Dispositif d'application selon l'une des revendications 3 à 5, **caractérisé en ce que**
a) le régulateur de pression de matériau (6) présente une entrée de consigne, à laquelle le régulateur de pression de matériau (6) reçoit une valeur de consigne pour la pression d'entrée de pompe de l'agent d'application à l'entrée de matériau (3) de la pompe doseuse à vis (1),
b) l'entrée de consigne du régulateur de pression de matériau (6) est alimentée en valeur de consigne via une vanne proportionnelle (19),
c) la vanne proportionnelle (19) fonctionne pneumatiquement.

7. Dispositif d'application selon l'une des revendications 3 à 6, **caractérisé en ce que**
a) le dispositif d'application comprend une pompe à piston (20) disposée en amont du régulateur de pression de matériau (6) et achemine l'agent d'application avec une certaine pression de sortie de pompe via le régulateur de pression de matériau (6) vers la pompe doseuse à vis (1),
b) la pression de sortie de la pompe à piston (20) est supérieure à la pression d'entrée de pompe de la pompe doseuse à vis (1), le régulateur de pression de matériau (6) abaissant la pression de sortie de pompe de la pompe à piston (20) à la pression d'entrée de pompe de la pompe doseuse à vis (1),
c) la pompe à piston (20) est reliée au régulateur de pression de matériau (6) comme suit :
c1) via une conduite rigide (21),
c2) via un tuyau flexible, ou
c3) via une combinaison d'une conduite rigide (21) et d'un tuyau flexible,
d) la conduite (21) entre la pompe à piston (20) et le régulateur de pression de matériau (6) présente de préférence une longueur de conduite d'au moins 2 m, 4 m, 6 m, 8 m, 10 m ou 12 m,
e) la pompe à piston (20) est une pompe à piston alternatif à air comprimé,
f) la pompe à piston (20) présente une pression de refoulement maximale d'au moins 10 bar, 50 bar, 100 bar, 200 bar ou 350 bar.

8. Dispositif d'application selon l'une des revendications précédentes, **caractérisé en ce que**
a) le dispositif d'application comporte un chauffage (7) pour chauffer l'agent d'application, en particulier comme chauffage d'accompagnement pour chauffer un tuyau ou un tube guidant l'agent d'application, et
b) le dispositif d'application comprend une bride de montage (15) pour le montage amovible du dispositif d'application sur une bride de robot (15) d'un robot d'application (11), 10 le dispositif d'application comprenant les composants suivants, qui peuvent être montés ensemble au moyen de la bride de montage (15) sur la bride de robot du robot d'application et sont bridés à la pompe doseuse à vis (1) :
b1) la pompe doseuse à vis (1) avec l'entraînement rotatif (2),
b2) l'applicateur (9),
b3) le régulateur de pression de matériau (6),
b4) la vanne proportionnelle (19),
b5) le premier capteur de pression (17) et/ou le deuxième capteur de pression (18) et/ou le troisième capteur de pression (16), et
b6) le chauffage (7), et/ou
c) la pompe doseuse à vis (1) est conçue pour acheminer un débit volumique d'au moins 5cm³/s, 10cm³/s, 20cm³/s ou 24cm³/s, et
d) l'entraînement rotatif (2) de la pompe doseuse à vis (1) est un servomoteur électromoteur, de sorte que la position angulaire du servomoteur est connue par la commande du servomoteur.

9. Installation d'application comprenant
a) deux dispositifs d'application selon l'une des revendications précédentes pour acheminer respectivement un composant d'un matériau bicomposant et
b) un mélangeur pour mélanger les deux composants du matériau bicomposant.

10. Robot d'application (11) comprenant plusieurs bras de robot (12, 13), un axe de main de robot (14) et une bride de robot (10), le dispositif d'application selon l'une des revendications précédentes ou l'installation d'application selon la revendication 9 étant monté sur la bride de robot (10).

11. Procédé de fonctionnement pour un dispositif d'application selon l'une des revendications précédentes, **caractérisé en ce que** le glissement de pompe de la pompe doseuse à vis (1) est déterminé.

12. Procédé de fonctionnement selon la revendication 11, **caractérisé par** les étapes suivantes pour la détermination du glissement de pompe de la pompe doseuse à vis (1) :
a) Fermer la vanne principale de l'applicateur (9),
b) Établir une pression préalable prédéfinie à la sortie de matériau (4) de la pompe doseuse à vis (1), en acheminant l'agent d'application par la pompe doseuse à vis (1) contre la vanne principale fermée,
c) Mesurer la pression de sortie de pompe à la sortie de matériau (4) de la pompe doseuse à vis (1) au moyen du deuxième capteur de pression,
d) Arrêter la pompe doseuse à vis (1) lorsque la pression de sortie de pompe à la sortie de matériau (4) de la pompe doseuse à vis (1) atteint la pression préalable prédéfinie,
e) Réguler la pression d'entrée de pompe à l'entrée de matériau (3) de la pompe doseuse à vis (1) à une valeur de consigne constante au moyen du régulateur de pression de matériau (6),
f) Mesurer la chute de pression temporelle à la sortie de matériau (4) de la pompe doseuse à vis (1) ou à l'applicateur (9) en amont de la vanne principale pendant une période de surveillance après l'arrêt de la pompe doseuse à vis (1) au moyen du deuxième capteur de pression, et
g) Évaluation de la chute de pression temporelle pendant la période de surveillance pour la détermination du glissement de pompe de la pompe doseuse à vis (1).

13. Procédé de fonctionnement selon la revendication 11, **caractérisé par** les étapes suivantes pour la détermination du glissement de pompe de la pompe doseuse à vis (1) :
a) Fermer la vanne principale de l'applicateur (9), b) Établir une pression préalable prédéfinie à la sortie de matériau (4) de la pompe doseuse à vis (1), en acheminant l'agent d'application par la pompe doseuse à vis (1) contre la vanne principale fermée,
c) Mesurer la pression de sortie de pompe à la sortie de matériau (4) de la pompe doseuse à vis (1) au moyen du deuxième capteur de pression,
d) Détecter la position angulaire de la pompe doseuse à vis (1) lorsque la pression de sortie de pompe à la sortie de matériau (4) de la pompe doseuse à vis (1) atteint la pression préalable prédéfinie, en particulier par
d1) Mesurer la position angulaire au moyen de l'encodeur de position angulaire ou par
d2) Interroger la position angulaire du servomoteur de la pompe doseuse à vis (1),
e) Réguler la pression d'entrée de pompe de la pompe doseuse à vis (1) à une valeur de consigne constante au moyen du régulateur de pression de matériau (6),
f) Réguler la pression de sortie de pompe à la sortie de matériau (4) de la pompe doseuse à vis (1) à la pression préalable prédéfinie par une commande de l'entraînement rotatif (2) de la pompe doseuse à vis (1),
g) Mesurer la variation temporelle de la position angulaire de la pompe doseuse à vis (1) pendant une période de surveillance après l'atteinte de la pression préalable prédéfinie, la période de surveillance comprenant plusieurs minutes, en particulier cinq minutes, et
h) Évaluation de la variation temporelle de la position angulaire de la pompe doseuse à vis (1) pendant la période de surveillance pour la détermination du glissement de pompe de la pompe doseuse à vis (1).

14. Procédé de fonctionnement selon la revendication 12 ou 13, **caractérisé en ce que**
a) en fonction du glissement de pompe déterminé, une correction est effectuée afin d'éviter une erreur de dosage,
b) la correction prévoit qu'une nouvelle courbe caractéristique de pompe soit mesurée, laquelle représente la relation entre la vitesse de rotation de pompe de la pompe doseuse à vis (1) et le débit volumique acheminé.

15. Procédé de fonctionnement selon l'une des revendications 11 à 14, **caractérisé en ce que**
a) une cordon allongé (22) de l'agent d'application est appliqué sur un composant (23) par l'applicateur (9), en guidant l'applicateur (9) avec une certaine vitesse de déplacement (v1, v2, v3) le long du cordon (22) sur le composant (23), l'applicateur (22) appliquant l'agent d'application avec un certain débit volumique (Q1, Q2, Q3),
b) le débit volumique (Q1, Q2, Q3) de l'agent d'application est varié dynamiquement pendant le déplacement de l'applicateur (9) le long du cordon (23), et/ou
c) la vitesse de déplacement (v1, v2, v3) de l'applicateur (9) est variée dynamiquement pendant le déplacement de l'applicateur (9) le long du cordon (23).
